# EUROPEAN PATENT APPLICATION

(11) **EP 3 018 803 A1**
(43) Date of publication of application: **11.05.2016**
(21) Application number: 14192176.7
(22) Date of filing: 06.11.2014
(51) Int. Cl.: H02K 15/06, H02K 15/03, H02K 15/00, F03D 1/00, H02K 7/18, H02K 1/27, H02K 3/47, H02K 1/20, H02K 1/32

(54) **Placement and replacement system and method for placing and replacing the electrical components of electromagnetic rotary machine**

(71) Applicant: Oü, Goliath Wind, 11415 Tallinn (EE)
(72) Inventor: Pabut, Ott, 13417 Tallinn (EE); Zingg, Reto, 10619 Tallinn (EE); Kisseljov, Igor, 10616 Tallinn (EE)
(74) Representative: Sarap, Margus

(57) **Abstract**

A placement and replacement system and method for placing and replacing the electrical components of electromagnetic rotary machine, wherein the system comprises a frame, multiple of system fixing means to attach the system to the electromagnetic rotary machine, moving means for inserting electrical components to the electromagnetic rotary machine and extracting the electrical components from the electromagnetic rotary machine to place or replace the electrical components.

## Description

### Technical Field

The present invention belongs to the field of devices and methods for changing the electrical components, more specifically coils and magnets, of electromagnetic rotary machines, more specifically electromagnetic rotary machines with air-gap windings.

### Background Art

The core of a generator is its coils and magnets, both situated at the outer-diameter of the generator on the static and rotating parts respectively. Coils and magnets are critical components, which have to be inspected and serviced on a regularly basis and if necessary replaced for the generator to maintain its integrity and performance. Usually the permanent magnets are assembled on the generator structure with heavy machinery in factory environment.

Preassembly of the magnets makes the generator sectors magnetically active during transportation phase. Mounting and replacing coils and magnets in-situ may be at certain cases even more than in 100 m height.

Well known generators that exist on the market are transported in one piece, their electrical elements are mounted in the factory and in case of premature failure the whole machine is replaced or lifted down from the tower for repair or maintenance.

There are number of issues that the prior art does not solve. None of the known devices and methods can be used for placing and replacing both coils and magnets. Having one method and device for both elements significantly reduces the need for investment in materials and service personnel training. Furthermore, only one device would need to be taken up to the generator on the wind turbine tower, if both coils and magnets have failed. It is also suitable for handling the coils and magnets either in the factory, on the generator assembly site or up tower. A configuration of a device which could be reasonably and efficiently operated in all of the above mentioned conditions would result in reduced training time and material costs for various configurations of equipment that is essentially performing the same task.

The prior art devices allow only initial placement of either coils or magnets into the generator. The way that the devices are designed, handled and the fixing is performed allows no easy replacement of the electrically active elements. With this configuration the initial cost of assembly is reduced but future failures on the active elements would cause substantial problems and costs in servicing the machines.

The known devices require presence of rotor for placing or replacing coils on stator and presence of stator for placing or replacing magnets on rotor. This implies that the modules cannot be placed or replaced while the rotor and stator of the generator have not been inserted to each other and certain corresponding positioning is needed between the two elements. Furthermore, in some cases it is required to rotate rotor or even stator to a specific position, so the placement or replacement could take place. This is an action that significantly increases time for needed operations and complicates the entire procedure by demanding extra tools or design features. Therefore, a tool which could be operated on all stator and rotor positions would have numerous advantages over the known solutions. Also, in certain cases it would be desired to conduct the assembly of either coils or magnets without having either stator or rotor present, as this provides more space for persons carrying out the actions and offers freedom in selecting assembly steps.

The prior art tooling in terms of coil placement and replacement is mostly suitable for replacing modules of conventional slotted stator windings. However, as it is technically difficult to modularize this electromagnetic configuration, the developed modules are heavy and cannot be handled by one or two persons. Due to the weight of the modules, the equipment needed to manipulate them is also heavy and requires extra devices and lifting hoists to be attached to the generator. Even though, this is more cost efficient than removing the whole generator for maintenance or replacement, the extra equipment unnecessarily complicates the whole procedure compared to a solution where the module and the device could be handled by one or two persons without extra tooling. One also has to acknowledge that devices and methods which are meant for slotted continuous stator windings, do not suit and cannot be adapted with reasonable effort for air-gap winding.

The closest known prior art solutions to avoid the placement and replacement and transportation issues and heavy machinery for electrical machines used in wind turbines are described as follows.

US patent application US 2012073118 A (BYWATERS GARRETT L ET AL) 29.03.2012 describes a module-handling tool for facilitating installation, servicing and dismantling of an electromagnetic rotary machine, having a modularized active portion. The handling tool itself is very complicated in terms of structure, operation procedure and fixing system. Due to the complexity and heavy weight, it needs to be hoisted up to the wind turbine by a crane and requires usage of an auxiliary turning mechanism on ground. Substantial workforce is needed to carry out the module replacement operation. Necessity for a crane adds considerable cost and time to the entire operation. Usage and fixing of the system requires presence of the generator rotor. During initial assembly this could be undesirable as the rotor would restrict access to the stator area. Furthermore, only few places at the rotor can accommodate the fixtures of the handling tool and therefore the rotor needs to be rotated to a module receiving location before the actual servicing can take place. This has considerable negative effects on the replacement time and unnecessarily complicates the entire procedure. Usage of the tool requires removal of permanent magnets in the vicinity of the replaceable coil modules. Therefore, another tool is needed to first remove the magnets and then further equipment is required to store them safely. Both of which are undesirable as they add cost and complexity to the entire operation and propose serious safety risks.

The known devices and method require large amount of assembly hours and sophisticated technology for mounting the electrical parts, i.e. coils and magnets, on the generator; increase the maintenance time and propose additional concerns related to safety; the known tools can be used only for insertion or removing of either magnet modules or coil modules and cannot be used removal or replacement or insertion of both modules; due to the heavy weight the additional hoisting equipment is required, which increases time for needed operations and complicates the entire procedure by demanding extra tools and design features; the known solutions cannot be handled by one or two persons, due to the complexity the special personnel training is needed; and complicated positioning systems are needed to achieve correct position between rotor and stator. These drawbacks make the prior art solutions complicated, expensive and unsafe to use.

### Summary of invention

The purpose of the present placement and replacement system is to enable safe and controlled placement and replacement of coil modules and corresponding magnets on an electromagnetic rotary machine (for example generator of wind motors, generator of marine current turbines, motor of marine propulsion devices), which could be but does not have to be located on the top of the wind turbine tower with minimum time, prior training and physical effort. The design of the present placement and replacement system allows replacing individual elements of the electromagnetic rotary machine in case of electrical component (for example coils, magnets) failure, instead of replacing the whole machine. Replacing whole generator requires high capacity cranes, special personnel training and considerable amount of time, during which the machine and correspondingly the turbine cannot be operated.

The present placement and replacement system for placing and replacing the coils and magnets of electromagnetic rotary machine enables to carry out the placement or replacement procedure with a crew of maximum 2 persons without using hoisting machines (e.g. cranes, etc.) or other external assembly devices (winches, jigs, turntables etc.). The same principal procedure and very same device can be used for both coils and magnets. However, when using the placement and replacement system on the stator, no engagement or removal of rotor and its elements is necessary. Same applies for placing or replacing magnets on rotor. Furthermore, the same device can be used efficiently in factory, at the turbine assembly site or up tower after full or partial installment of the electromagnetic rotary machine and even without having the ability to turn the rotor to a predefined module receiving location.

The electromagnetic rotary machine utilizes concentrated air-gap windings in contrast to known machines, which use continuous windings with slots. This enables to design and build the coil and magnet modules fully independent of each other and light enough to be handled by a crew of maximum 2 persons also for machines with capacities in the multi-megawatt range.

The separated coil and magnet modules are fitted with a heat exchanger having a geometrical shape that creates a cavity between the main part of the module and attachment point to the generator structure. This cavity is used for placing the placement and replacement system through the coil or magnet module. As the rails, upon which the modules are fixed, are same for both rotor and stator and over the rotor and stator perimeter, fixing and positioning of the placement and replacement system is similar for all positions and for both rotor and stator. As the geometrical locking between the placement and replacement system and magnet or coil module heat exchanger is not gravity direction dependent, the system is used at all positions in similar manner without having to deal with changing gravity.

As the present placement and replacement system is placed through the coil or magnet module in such a manner that it extends away from the generator air-gap, only the coil and magnet modules are respectively affected by the replacement action and no interaction between rotor and stator is necessary. Furthermore, the usage of non-magnetic materials and the manner of geometrical locking between the system and coil or magnet modules enables to use the placement and replacement system under the influence of magnetic field of the electromagnetic rotary machine while keeping full functionality and control over the system behavior. This means that the placement or replacement action can take place at any phase of the assembly process as soon as at least one of the generator support structure modules has been manufactured. As the system is not affected by the machine's relative position towards the gravity direction, it can be used at any phase of the assembly process with same effectiveness in the factory, at the generator assembly site or up tower.

The differences between the present placement and replacement system and prior art devices:
- Same method and system for both coil and magnet;
- The present placement and replacement system can be used on generator configurations with air-gap winding;
- The present placement and replacement system and modules can be handled with a crew of maximum 2 persons without having to use other external assembly devices like winches, jigs, turntables, cranes etc.;
- The present placement and replacement system does not require the presence or preadjustment of rotor when handling the coils and presence of preadjustment of stator when handling the magnets;
- The present placement and replacement system can be used in the same manner at any positions of the electromagnetic rotary machine and also in a factory, assembly site or up the wind turbine tower;
- The present placement and replacement system is lighter, less expensive, easier to mount, easier to remove and faster to operate than any other know prior art solution;
- The present placement and replacement system is not affected by the magnetic forces of electromagnetic rotary machine.

### Brief description of drawings

The present invention is explained more precisely with references to figures added, where:
FIG. 1 shows a preferred embodiment of a placement and replacement system according to present invention;
FIG. 2 shows an example of electromagnetic rotary machine with replaceable coil and magnet modules;
FIG. 3 illustrates a front view of the present placement and replacement system shown on FIG. 2 with magnet module;
FIG. 4 illustrates a front view of the present placement and replacement system shown on FIG. 2 with coil module;
FIG. 5 illustrates a cross-sectional view of the placement and replacement system and attachment profile, bearing assemblies and main body in the preferred embodiment;
FIG. 6 shows an alternative embodiment of attachment profile, bearing assemblies and main body;
FIG. 7 shows second alternative embodiment of attachment profile, bearing assemblies and main body;
FIG. 8 to FIG 10 show an example of a procedure concerning electrical component removal and replacing with the placement and replacement system according to present invention.

### Description of embodiments

The placement and replacement system according to present invention for placing and replacing the electrical components of electromagnetic rotary machine, comprising frame, multiple of system fixing means to attach the system to the electromagnetic rotary machine, moving means for inserting electrical components to the electromagnetic rotary machine and extracting the electrical components from the electromagnetic rotary machine to place or replace the electrical components.

The frame of the system comprises a movable carriage 1 and main body 2 comprising guiding means. The system fixing means comprises first mounting bracket 3 and second mounting bracket 4, multiple of nut block fixing means 5, at least one adjustment mean 6, at least one bracket mounting element 7. The moving means comprises movable carriage 1, screw mechanism 8 including locking mean, nut block, preferably threaded nut block 9, crank block assembly 10, first bearing assembly 11 and second bearing assembly 12 connecting the main body 2 and movable carriage 1, turning head 13, support bearing 14, multiple of support bearing fixing means 15, and attachment profile 16.

The placement and replacement system according to present invention comprises a movable carriage 1, screw mechanism 8, threaded nut block 9, crank block assembly 10, main body 2, first bearing assembly 11 and second bearing assembly 12 connecting the main body 2 and movable carriage 1, turning head 13, support bearing 14, adjustable mounting bracket 3, at least one adjustment mean 6 (for example bolts), fixed mounting bracket 4, multiple of nut block fixing means 5, multiple of support bearing fixing means 15.

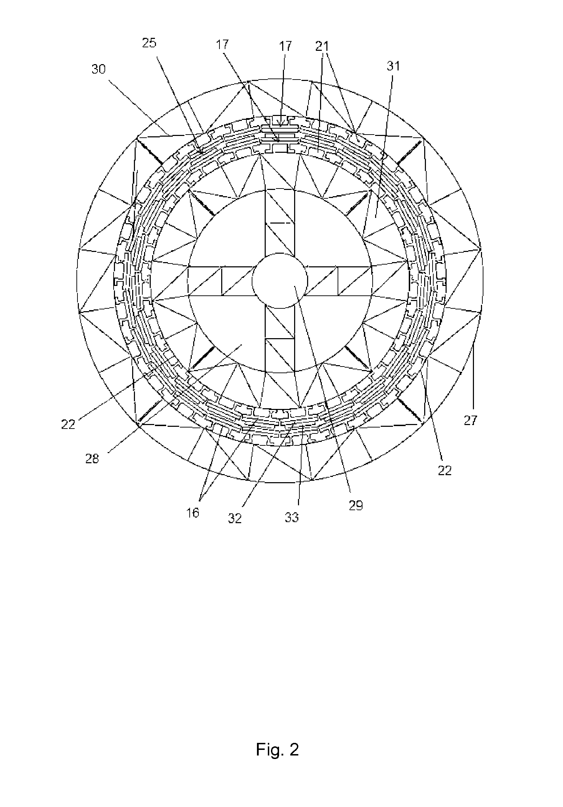

FIG. 2 shows an example of electromagnetic rotary machine for which the present placement and replacement system is used having a stator 27 and rotor 28. Both of which are supported by main shaft and king-pin assembly 29. To use the present placement and replacement system, the rotor 28 of electromagnetic rotary machine is preferably located radially inward from the stator 27 however, in the alternative embodiments the placement and replacement system is used in configuration where stator 27 is located radially inward from the rotor 28. Both stator 27 and rotor 28 are made up from plurality of stator structure segments 30 and rotor structure segments 31 which functionally complete the stator 27 and rotor 28 carrier structures. These carrier structures feature generator fixing rails 22, having the same cross-sectional geometry.

The present placement and replacement system in the preferred embodiment is applicable, wherein the rails feature preferably H-shaped geometry, however in alternative embodiments the placement and replacement system is applicable for various other geometrical shapes that feature at least one extending edge like L, Z or T-bars; the stator and rotor fixing rails 22 feature the same cross-sectional geometry; the electrical component, coil and magnet, modules 17 feature a similar geometry in terms of features relevant for achieving fixing and the electrical component, coil and magnet, modules 17 can be handled with a crew of maximum two persons.

The stator rails 22 are used to carry the stator coil modules 17 and rotor rails 22 are used to carry the rotor magnet modules 17. Modularity of stator 27 is achieved by using concentrated air-gap windings which do not specifically require that the stator active parts form a circumferentially tight structure in order to achieve reasonable electromagnetic efficiency figures for the rotary machine. Furthermore, the utilization of air-gap winding concept has a number of advantages, for example the possibility to design and build the modules relatively light and fully independent of each other, which makes it possible to replace them in case of dielectric break down. This is of significant importance when considering electromagnetic rotary machines placed in wind power units. There the maintenance and repair works can be very difficult and expensive especially when large cranes and crews are needed. Therefore, the present placing and replacement system which can be handled by a crew of maximum 2 persons without additional lifting equipment or jigs helps to achieve large economic impact.

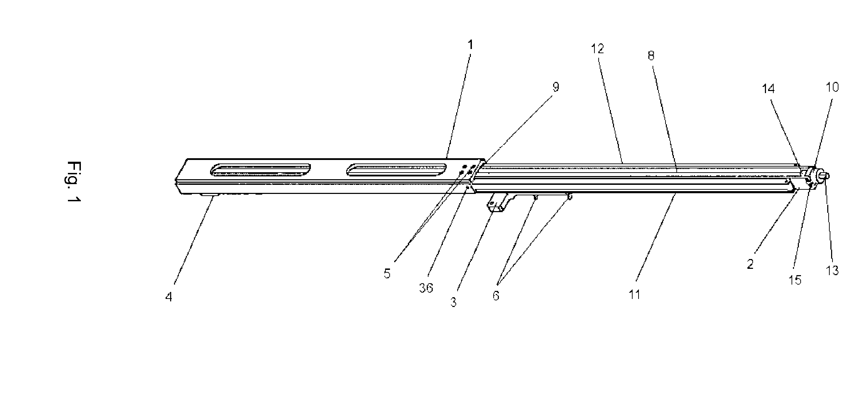

FIG. 1 shows a preferred embodiment of the present placement and replacement system for placing and replacing the electrical component modules 17, wherein the component modules are coil and magnet modules, which are to be engaged with the movable carriage 1. In order to facilitate translational movement a screw mechanism 8 is attached to the movable carriage 1 via threaded nut block 9. As the threads of the screw mechanism 8 and nut block 9 become engaged, the movable carriage 1 will be translated along the rotational axis of the screw mechanism 8 while the mechanism is being turned. The threaded nut block 9 is fixed to the movable carriage 1 by nut block fixing means 4.

To combat the acting forces and block the rotational movement of the movable carriage 1, it is guided on the surface of the main body 2 by a first bearing assembly 11 and second bearing assembly 12. In the present embodiment, preferably pair of linear ball bearing rails are positioned on the main body 2, in alternative embodiments various other guiding means to facilitate the needed manner of guiding, like sliding bearings, multiple of attached roller bearings or full block anti friction materials, are possible. By the movable carriage 1, main body 2 and first bearing assembly 11 and second bearing assembly 12 is formed a system exhibiting stiffness properties that allow the system to withstand the magnetic and gravity forces without compromising the system's ability to facilitate translational movement for example due to the blockage of the first bearing assembly 11 and second bearing assembly 12 by deformations.

During the operation of the present placement and replacement system, it experiences a number of forces varying in strength and direction. In the preferred embodiment, to avoid involuntary movement of the carriage 1 while under the influence of these forces, the screw mechanism 8 comprises locking mean, for example trapezoidal or square thread profiles. In alternative embodiments the involuntary movement is avoided by application of braking systems, usage of high ratio gearing or application of bearings, with high friction, to support the screw mechanism 8.

To generate translational movement the screw mechanism 8 can be driven by a suitable drive mechanism via the crank block assembly 10 by applying force or a tool, capable of generating such force, to the turning head 13 (for example hexagonal wrench, hand-crank, pneumatic or electric or hydraulic mechanism or another tool capable of generating rotational force to move the movable carriage 1). The crank block assembly 10 is supported by a support bearing 14, which enables the crank block to turn around its rotational axis while blocking all other movements. The support bearing 14 is attached to the main body 2 by support bearing fixing screws 5.

Adjustable mounting bracket 3 and fixed mounting bracket 4 are attached to the main body 2 in order to make it possible for the system to become engaged with stator rails and rotor rails 22 (FIG. 2). The fixed mounting bracket 4 is attached to the main body 2 by means of welding or utilization of screws and bolts. The adjustable mounting bracket 3 is fixed to the main body via at least one adjustment mean 6 in order to allow necessary adjustment movements described in following paragraphs.

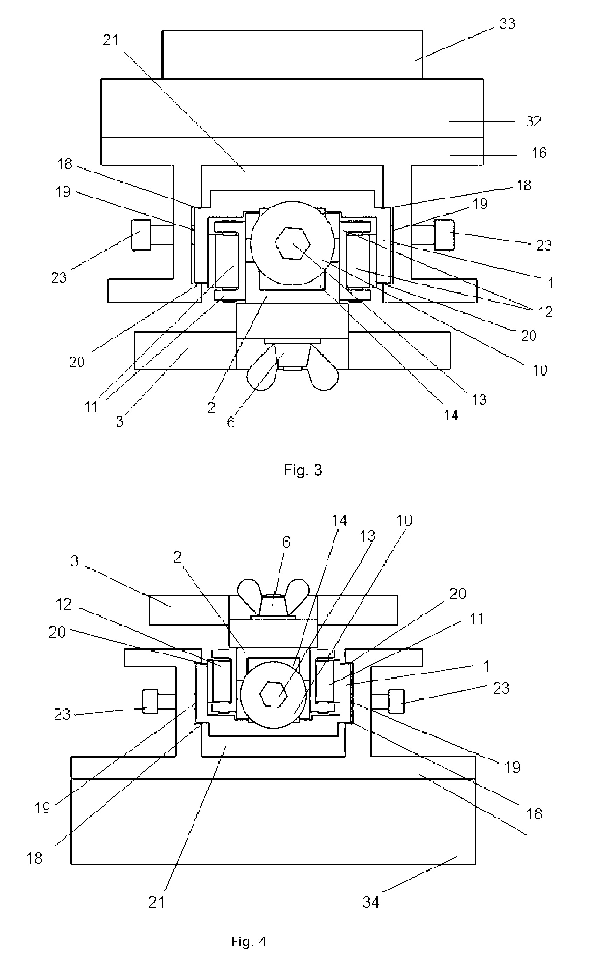

FIG. 3 illustrates a front view of the placement and replacement system's engagement with the electrical component module 17, for example magnet module, comprising attachment profile 16, base plate 32 and permanent magnet blocks 33, wherein the attachment profile 16 is magnet attachment profile, having a cavity 21 in the middle of the profile with inner mounting surfaces 18, vertical mounting surfaces 19 and outer mounting surfaces 20.

FIG. 4 illustrates the system's engagement with the electrical component module, for example coil module 17, comprising attachment profile 16 and embedded winding module 34, wherein the attachment profile 16 is coil attachment profile, having a cavity 21 in the middle of the profile with inner mounting surfaces 18, vertical mounting surfaces 19 and outer mounting surfaces 20.

Due to that, the magnet module and coil module comprise attachment profile 16 with the exactly same inner geometry, the system's engagement with the module is therefore only illustrated based on the example of the magnet module 17.

In addition to the placement and replacement action the attachment profile 16 serves also as a passive heat exchanger by dissipating heat generated during energy production of the electromagnetic rotary machine. The heat exchanger for the modules is required from the operational side of the machine, while only the inner geometry of it is shaped in a form suitable for placement and replacement action. Therefore, the attachment profile 16 is utilized for two functions, bringing savings in material and production costs.

Referring to FIG. 3 and FIG. 4, to facilitate the placement or replacement action, the system is slid through the cavity 21 in the attachment profile 16. This features inner mounting surfaces 18, vertical mounting surfaces 19 and outer mounting surfaces 20, which form an enclosed space in a manner that once the movable carriage 1 has been inserted into the cavity 21, only translational movement along the screw mechanism's 8 length wise axis remains possible. This degree of freedom is removed by placing at least two mounting elements 23 (for example screws, bolts, etc.) through the apertures 35 of attachment profile 32 into the apertures 36 of movable carriage 1.

Geometrical locking between placement and replacement system and attachment profile 16 is facilitated in such a manner that the movable carriage 1 fully supports the attachment profile 16 despite the particular direction of gravity or magnetic forces acting in the view plane. For example, if the major force component is acting in the vertical direction of the view plane, the module is supported by inner mounting surfaces 18 or outer mounting surfaces 20. When the major force component is acting in the horizontal direction of the view plane, the module is supported by vertical mounting surfaces 19. The particular feature makes it possible to use the placement and replacement system at any position of the electromagnetic rotary machine if proper mounting of the system to the rails 17 can be facilitated.

The ability to use the system at any position of the electromagnetic rotary machine with same effectiveness allows performing the needed replacement action without having to employ complicated positioning systems to achieve correct position between rotor and stator.

Handling and initial positioning of the system under the influence of magnetic forces is complicated and labour intensive work. In general, the influence of magnetic forces can be avoided for the placement of coil modules 17 but must be taken into account for magnet modules 17. Therefore, to use one system for both of the electrical component modules 17 the elements of the present placement and replacement system are composed of non-ferromagnetic materials, such as austenitic stainless steel, ceramics, plastic, fiberglass or other composite materials. This allows using the same system for both electrical component, coil and magnet, modules 17 with same effectiveness.

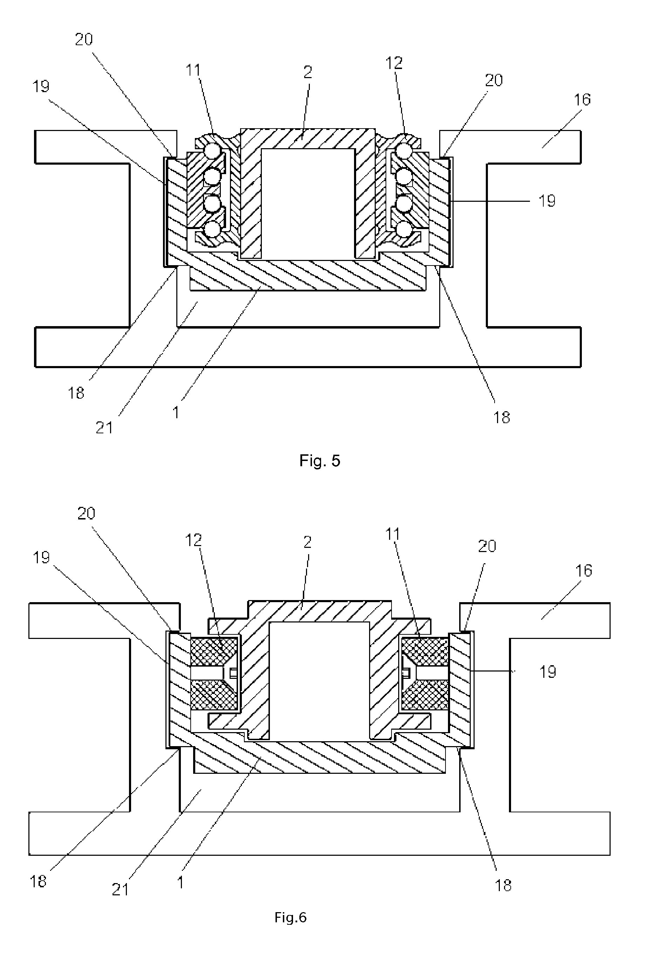

FIG. 5 illustrates cross-sectional view of the placement and replacement system with the attachment profile 16. In this alternative embodiment the inner mounting surfaces 18 and outer mounting surfaces 20 in the profile are horizontal while the vertical supporting surfaces 19 are vertical. All these surfaces come in contact with the movable carriage 1 and facilitate the geometrical locking between elements. The movement of the carriage 1 relative to the main body 2 is facilitated by the first bearing assembly 11 and second bearing assembly 12, wherein the first and second bearing assembly are linear ball bearing.

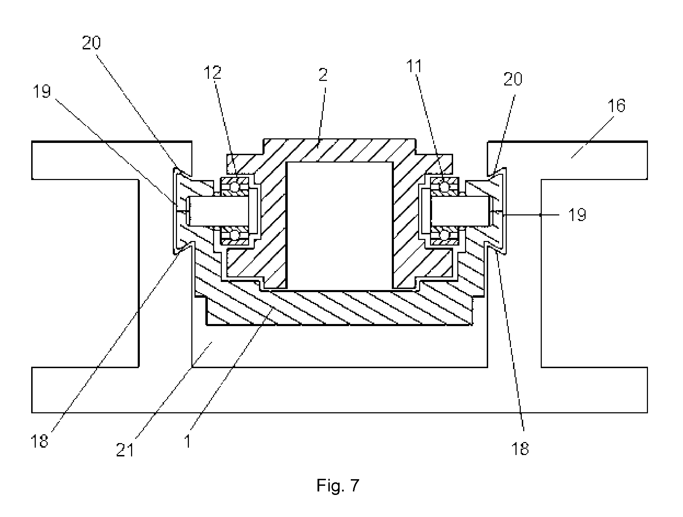

FIGS. 6 and 7 show both alternative embodiments of attachment profile 16 and first bearing assembly 11 and second bearing assembly 12 designs. On FIG. 6 the movement of the carriage 1 relative to the main body 2 is facilitated by bearing assemblies 11 and 12 consisting of screwed on blocks of antifriction material (for example polyamide).

On FIG. 7 the bearing assemblies 11 and 12 consist of numerous screwed on roller bearings while the inner mounting surfaces 18 and outer mounting surfaces 19 are non- horizontal and the geometrical locking between the movable carriage 1 and attachment profile 16 is achieved by fishtail like elements.

The method, according to the present invention, for placing and replacing the electrical components of electromagnetic rotary machine with the system comprising frame, multiple of system fixing means to attach the system to the electromagnetic rotary machine, moving means for inserting electrical components to the electromagnetic rotary machine and extracting the electrical components from the electromagnetic rotary machine to place or replace the electrical components. The method comprises attaching the system to the electromagnetic rotary machine to place and/or replace the electrical components, removing the electrical component to replace the electrical component and inserting the electrical component to the electromagnetic rotary machine.

Attaching the system to the electromagnetic rotary machine comprises following steps: sliding the system through the cavity 21 in the electrical component 17 attachment profile 16; clamping initially the system to the extending edges of stator sector rails 22 by first mounting bracket 3 and second mounting bracket 4; once initial clamping is achieved, moving the first adjustable mounting bracket 3 forward towards the extending edge of the stator rail 17 and fixing to it by at least one bracket mounting element 7 and by securing at least one adjustment element 6 to the main body 2.

Removing the electrical component from the electromagnetic rotary machine comprises following steps: positioning and placing of the system; translating the movable carriage 1 into the attachment profile 16 by crank block assembly 10 and geometrically locking the attachment profile 16 and the system; locking the mounting elements 23 into place and removing module mounting elements 24 and engaging the electrical component 17 with the placement and replacement system and transporting out of the electromagnetic rotary machine air-gap 25 by using the crank block assembly 10; transporting the electrical component 17 out of the electromagnetic rotary machine air-gap 25 to the end position and removing the mounting elements 23; finalizing the removing procedure by sliding the electrical component 17 off the placement and replacement system.

Removing the placement and replacement system by unclamping the first mounting bracket 3 and second mounting bracket 4 from the rails 22 or inserting the electrical component to the electromagnetic rotary machine, wherein inserting the electrical component comprises following steps:
inserting new electrical component 17 by sliding the electrical component 17 onto the movable carriage 1 and locking into place by mounting elements 23; translating the electrical component 17 into end position of the placement and replacement system via crank block assembly 10; fixing the electrical component 17 onto the rails 22 by module mounting elements 24; releasing the placement and replacement system by removing the mounting elements 23 from the attachment profile 16 and main body 2; translating the movable carriage 1 into the start position via crank block assembly 10; loosening the adjustment elements 6 and removing the bracket mounting elements 7; moving the first mounting bracket 3 away from the rail 22 and sliding the placement and replacement system out of the attachment profile 16.

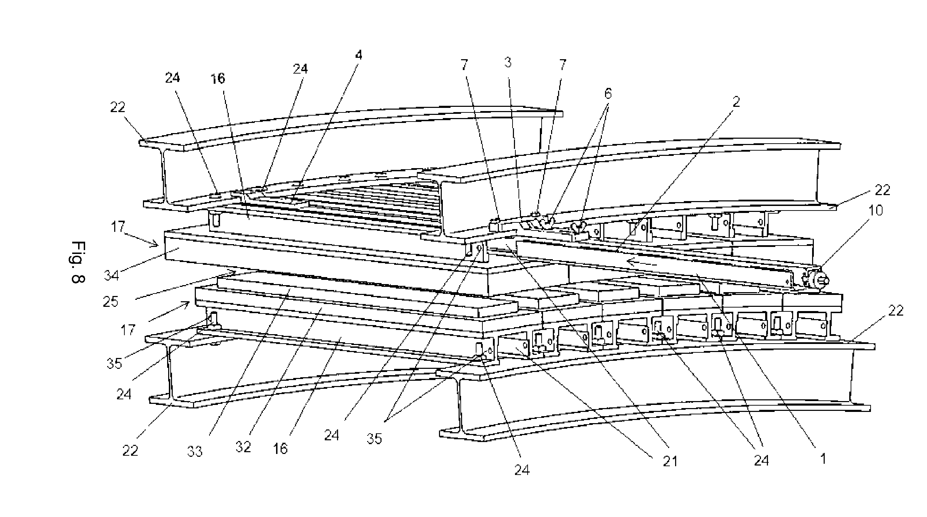

As follows the present method is described in more detailed. FIG. 8, FIG. 9 and FIG. 10 show an example of a procedure concerning electrical component, for example coil module, 17 removal with the placement and replacement system. In the preferred embodiment referring to FIG. 8, the system has been slid through the cavity 21 in the electrical component, for example coil module, 17 attachment profile 16. Adjustable mounting bracket 3 and fixed mounting bracket 4 are used to achieve the initial clamping between the system and the extending edges of stator sector rails 22. The possibility to use the attachment profile 16 in order to slide the system into correct position for fixing is crucial, when considering the effort required to manipulate the system. Although, it can be handled by one person, less effort is required to position the system correctly, when it can be initially supported by the coil profile.

Once initial clamping has been achieved, the adjustable mounting bracket 3 is moved forward towards the extending edge of the stator rail 22 and fixed to it by at least one bracket mounting element 7. Final position and placement of the system is achieved by securing at least one adjustment element 6 to the main body 2.

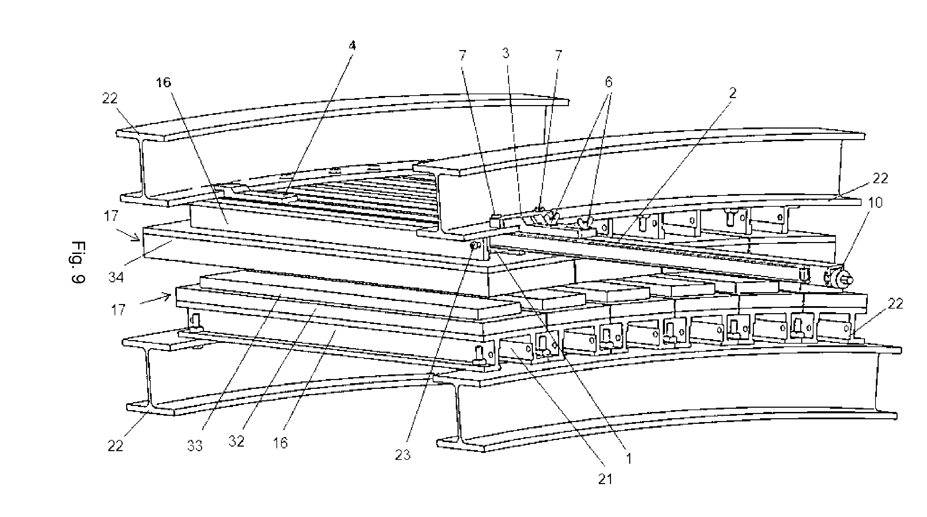

FIG. 9 describes a situation where the movable carriage 1 has been translated into the attachment profile 16 by the use of crank block assembly 10. By this action the initial geometrical locking between the attachment profile 16 and placement and replacement system is achieved. Once the mounting elements 23 are locked into place and module mounting elements 24 have been removed, the electrical component, for example coil module, 17 is fully engaged only with the placement and replacement system and can be transported out of the electromagnetic rotary machine air-gap 25 by the use of the crank block assembly 10.

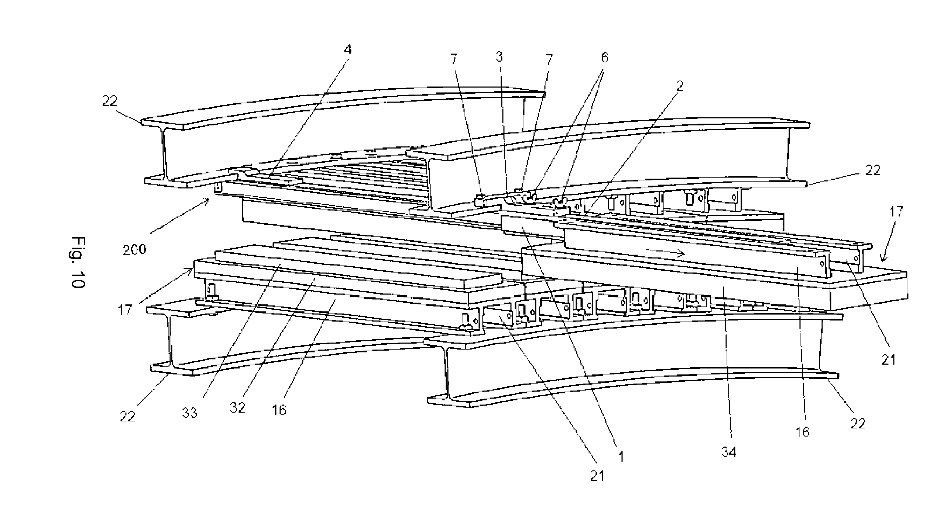

FIG. 10 illustrates the phase where the electrical component, for example coil module, 17 has been transported out of the electromagnetic rotary machine air-gap 25 to the end position and the mounting elements 23 (FIG. 9) have been removed. At this position the coil module 17 does not experience any magnetic forces and therefore is safe to handle without use of extra equipment. Now the module can be slid off the placement and replacement system and thus the removal procedure can be considered finalized. In the final position of the coil module 17, the support offered by the movable carriage 1 reduces the amount of manual labour required to handle the module, which makes it possible to handle it with a crew of maximum two persons.

After removal of coil the module 17 either the placement and replacement system can be removed by unclamping the adjustable mounting bracket 3 and fixed mounting bracket 4 from the stator rails 22 or a new coil module 17 can be inserted by reversing the previously described steps. New module is slid onto the movable carriage 1 and locked into place by mounting elements 23. After locking, the module will be translated into end position of the placement and replacement system via crank block assembly 10. There the plurality of module mounting elements 24 are utilized to fix the coil module 17 onto the stator rails 22. In order to remove the placement and replacement system the mounting elements 23 are removed from the attachment profile 16 and main body 2. The movable carriage 1 is translated into the starting position via crank block assembly 10. Adjustment elements 6 are loosened and bracket mounting elements 7 are removed. The adjustable mounting bracket 3 is moved away from the stator rail 22 and the placement and replacement system is slid out of the attachment profile 16.

In an alternative embodiment initial positioning of the placement and replacement system is attached to the stator rails 22 without having an electrical component, for example coil module, 17 on the site of placement. In that particular situation the system is clamped to the stator structure segment 30 in similar manner, however the initial positioning of the system is achieved via bracket mounting elements 7. The correctness of the positioning is confirmed by insertion and alignment of module mounting elements 24. In case of erroneous or undesired positioning, the whole coil module 17 and placement and replacement system assembly can be relocated by slightly loosening the bracket mounting elements 7 without compromising any of safety related requirements.

Low weight of the system, simple and fast operation principles make it possible and also technically reasonable to utilize the system for both coil and magnet placement and replacement up tower, in the factory and on the wind power unit erection site.

Furthermore, due to the fact that for example only rotor rails 22 are required to achieve system placement, neither the existence of stator or even full rotor structure is necessary. As outer diameters of directly driven electromagnetic rotary machines in wind power units are growing as capacities grow, ultimately mechanical segmentation of the carrier structures for such machines is necessary in order to avoid transportation issues. In such cases, the final assembly of machines would take place on the wind power unit erection site. As it is dangerous and economically unjustified to transport highly magnetized segments of electromagnetic rotary machines, the permanent magnet modules would ultimately have to be assembled also on that erection site. Therefore, a device and method which could be used to assemble coil and magnet modules at wind power unit erection site with needed efficiency and without demands for infrastructure can be regarded as highly beneficial.

## Claims

1. A placement and replacement system for placing and replacing the electrical components of electromagnetic rotary machine, comprising frame, multiple of system fixing means to attach the system to the electromagnetic rotary machine, moving means for inserting electrical components to the electromagnetic rotary machine and extracting the electrical components from the electromagnetic rotary machine to place or replace the electrical components, **characterized in that**,
- the frame of the system comprises a movable carriage (1) and main body (2) comprising guiding means;
- the system fixing means comprises first mounting bracket (3) and second mounting bracket (4), multiple of nut block fixing means (5), at least one adjustment mean (6), at least one bracket mounting element (7);
- the moving means comprises screw mechanism (8) including locking mean, nut block (9), crank block assembly (10), first bearing assembly (11) and second bearing assembly (12) connecting the main body (2) and movable carriage (1), turning head (13), support bearing (14), multiple of support bearing fixing means (15), and attachment profile (16), wherein
a screw mechanism (8) is attached to the movable carriage (1) via nut block (9), which is fixed to the movable carriage (1) by nut block fixing means (5), the movable carriage (1) is translated along the rotational axis of the screw mechanism (8) while the mechanism is being turned, the movable carriage (1) is guided on the surface of the main body (2) by a first bearing assembly (11) and second bearing assembly (12), the crank block assembly (10) is supported by a support bearing (14), the support bearing (14) is attached to the main body (2) by support bearing fixing means (15) and the electrical components to be replaced are engaged with the movable carriage (1).

2. The placement and replacement system according to claim 1, **characterized in that**, the electrical component is stator coil module or rotor magnet module (17).

3. The placement and replacement system according to claim 1, **characterized in that**, the first mounting bracket (3) is adjustable and second mounting bracket (4) is fixed.

4. The placement and replacement system according to claim 1, **characterized in that**, the guiding mean of main body (2) is pair of linear ball bearing rails, sliding bearings, multiple of attached roller bearings or full block anti friction materials.

5. The placement and replacement system according to claim 1, **characterized in that**, by the carriage (1), main body (2) and first bearing assembly (11) and second bearing assembly (12) the system exhibiting stiffness properties is formed.

6. The placement and replacement system according to claim 1, **characterized in that**, the screw mechanism (8) comprises locking mean, which is trapezoidal thread profile, square thread profiles, braking system, usage of high ratio gearing or application of bearings, with high friction.

7. The placement and replacement system according to claim 1, **characterized in that**, the turning head (13) can be engaged with hexagonal wrench, hand-crank, pneumatic, electric or hydraulic mechanism or another tool capable of generating rotational force to move the movable carriage (1).

8. The placement and replacement system according to claim 1, **characterized in that**, the first mounting bracket (3) and second mounting bracket (4) are attached to the main body (2).

9. The placement and replacement system according to claim 1, **characterized in that**, the first mounting bracket (3) is fixed to the main body via at least one adjustment mean (6).

10. The placement and replacement system according to claim 1, **characterized in that**, the bearing assemblies (11) and (12) are linear ball bearing, screwed on blocks of antifriction material or screwed on roller bearings.

11. The placement and replacement system according to claim 1, **characterized in that**, the movable carriage (1) comprises inner mounting surfaces (18), vertical mounting surfaces (19) and outer mounting surfaces (20), forming an enclosed space in a manner that once the movable carriage (1) has been inserted into the cavity (21), only translational movement along the screw mechanism's (8) length wise axis remains possible and the geometrical locking between the movable carriage (1) and attachment profile (16) is achieved.

12. The placement and replacement system according to claim 11, **characterized in that**, the inner mounting surfaces (18) and outer mounting surfaces (20) in the profile are horizontal and the vertical supporting surfaces (19) are vertical.

13. The placement and replacement system according to claim 11, **characterized in that**, the inner mounting surfaces (18), outer mounting surfaces (20) are non- horizontal.

14. The placement and replacement system according to claim 11, **characterized in that** the geometrical locking between the movable carriage (1) and attachment profile (16) is achieved in contact of inner mounting surfaces (18), supporting surfaces (19), outer mounting surfaces (20) with movable carriage (1).

15. The placement and replacement system according to claim 11, **characterized in that**, the geometrical locking between the movable carriage (1) and attachment profile (16) is achieved by fishtail like elements.

16. A method for placing and replacing the electrical components of electromagnetic rotary machine with the system comprising frame, multiple of system fixing means to attach the system to the electromagnetic rotary machine, moving means for inserting electrical components to the electromagnetic rotary machine and extracting the electrical components from the electromagnetic rotary machine to place or replace the electrical components, **characterized in that** the method comprises attaching the system to the electromagnetic rotary machine to place and/or replace the electrical components, removing the electrical component to replace the electrical component and inserting the electrical component to the electromagnetic rotary machine, wherein
Attaching the system to the electromagnetic rotary machine comprises following steps:
- Sliding the system through the cavity (21) in the electrical component (17) attachment profile (16);
- Clamping initially the system to the extending edges of stator sector rails (22) by first mounting bracket (3) and second mounting bracket (4);
- Once initial clamping is achieved, moving the first mounting bracket (3) forward towards the extending edge of the stator rail (22) and fixing to it by at least one bracket mounting element (7);
Removing the electrical component from the electromagnetic rotary machine comprises following steps:
- Positioning and placing of the system;
- Translating the movable carriage (1) into the attachment profile (16) by crank block assembly (10) and geometrically locking the attachment profile (16) and the system;
- Locking the mounting elements (23) into place and removing module mounting elements (24) and engaging the electrical component (17) with the placement and replacement system and transporting out of the electromagnetic rotary machine air-gap (25) by using the crank block assembly (10);
- Transporting the electrical component (17) out of the electromagnetic rotary machine air-gap (25) to the end position and removing the mounting elements (23);
- Finalizing the removing procedure by sliding the electrical component (16) off the placement and replacement system;
Removing the placement and replacement system by unclamping the first mounting bracket (3) and second mounting bracket (4) from the rails (22) or inserting the electrical component to the electromagnetic rotary machine, wherein inserting the electrical component comprises following steps:
- Inserting new electrical component (17) by sliding the electrical component (17) onto the movable carriage (1) and locking into place by mounting elements (23);
- Translating the electrical component (17) into end position of the placement and replacement system via crank block assembly (10);
- Fixing the electrical component (17) onto the rails (22) by module mounting elements (24);
- Releasing the placement and replacement system by removing the mounting elements (23) from the attachment profile (16) and main body (2);
- Translating the movable carriage (1) into the start position via crank block assembly (10);
- Loosening the adjustment elements (6) and removing the bracket mounting elements (7);
- Moving the first mounting bracket (3) away from the rail (22) and sliding the placement and replacement system out of the attachment profile (16).

17. The method according to claim 16, **characterized in that** the electrical component (17) is stator coil module or rotor magnet module.

18. The method according to claim 16, **characterized in that**, to generate translational movement the screw mechanism (8) is driven by a drive mechanism via the crank block assembly (10) by applying force or a tool, capable of generating such force, to the turning head (13).
